# EUROPÄISCHE PATENTSCHRIFT

(11) **EP 1 842 695 B1**
(45) Veröffentlichungstag und Bekanntmachung des Hinweises auf die Patenterteilung: **09.12.2009**
(21) Anmeldenummer: 07006507.3
(22) Anmeldetag: 29.03.2007
(51) Int. Cl.: B60B 33/02, B60B 33/00

(54) **Bremsrolle**
Brake drum
Tambour de freinage

(30) Priorität: 05.04.2006 DE 202006005676 U; 18.04.2006 DE 202006006302 U
(43) Veröffentlichungstag der Anmeldung: 10.10.2007
(73) Patentinhaber: Haussels, Berthold, 42929 Wermelskirchen (DE)
(72) Erfinder: Haussels, Berthold, 42929 Wermelskirchen (DE)
(74) Vertreter: Füssel, Michael

(56) Entgegenhaltungen:
- WO-A-98/30475
- BE-A- 563 345
- DE-A1- 2 937 573
- US-A- 4 276 962
- US-A- 4 333 207
- US-A- 4 649 596

## Beschreibung

Die vorliegende Erfindung betrifft eine Bremsrolle nach Oberbegriff des Hauptanspruchs.

Derartige Bremsrollen sind beispielsweise aus WO-A-98/30475 bekannt.

Aufgabe der vorliegenden Erfindung ist es, eine derartige Bremsrolle so weiter zu bilden, dass die Bremsbetätigung sicher gegen Überlast geschützt ist.

Diese Aufgabe löst die Erfindung mit den Merkmalen des Hauptanspruchs.

Wesentlich ist die Begrenzung des Weges des Bremspedals auf seinem Weg von der Freigabestellung, ggf. über eine mehr oder weniger ausgeprägte Totpunktstellung hinaus, in die Bremsstellung.

Das Bremspedal läuft daher bei Betätigung durch den Fuß auf einen stabilen Endanschlag auf, so dass die gesamten Übertragungsteile des Koppelgetriebes, welche üblicherweise die Schwenkbewegung des Bremspedals auf den Bremskörper übertragen, allerhöchstens noch mit derjenigen Kraft belastet werden, die zum Erreichen der Auflaufposition des Bremspedals am Endanschlag notwendig ist.

Jedwede darüber hinaus gehende Betätigungskraft am Bremspedal überträgt sich nicht mehr auf das Koppelgetriebe.

Der Endanschlag ist so stabil gewählt, dass selbst unter Aufbringung einer Last von ca. 1.500 N oder mehr keine Verformung des Koppelgetriebes mehr erfolgt.

Damit wird der Verschleiß im Koppelgetriebe verringert und die Bremsfunktion ist über eine lange Gebrauchszeit sichergestellt.

Das Prinzip der Erfindung beruht also darauf, dass das Bremspedal zwischen zwei genau definierten Endstellungen hin- und herbewegbar ist, die so gewählt sind, dass im zwischen Bremspedal und Bremskörper befindlichen Koppelgetriebe nur die zum Erreichen der Blockierstellung der Bremse notwendigen Anpresskräfte erzielt werden.

Dies gilt sowohl für eine als Bockrolle als auch für eine als Lenkrolle ausgebildete Bremsrolle.

Ergänzend wird vorgeschlagen, den Endanschlag starr mit dem Rollenchassis zu verbinden.

Dies geschieht auf einfache Weise dadurch, dass der Endanschlag das Bremspedal, welches üblicherweise von oben nach unten gedrückt wird, um die Bremsstellung zu erreichen, unterfängt.

Hierzu kann ein U-förmiges Profil dienen, an dessen freien Enden der Parallelschenkel vorzugsweise nach auswärts weisende Befestigungsflansche oder ähnliches vorgesehen sind, um den Endanschlag auf geeignete Weise am Rollenchassis zu befestigen.

Ergänzend wird vorgeschlagen, dass die Elastizität der gesamten Anordnung zwischen Bremspedal und Bremskörper ausgenutzt wird, so dass das Bremspedal stets in die Bremsstellung gerät, bevor es auf den Endanschlag trifft.

Ein geringes Spiel zwischen dem in Bremsstellung befindlichen Bremspedal und dem Endanschlag ist daher förderlich.

Erst bei Überschreiten dieses geringen Spiels, welches jedoch im Koppelgetriebe zu keinerlei plastischen Verformungen führt, wird das Bremspedal starr auf den Endanschlag laufen.

Das U-förmige Profil, welches den Endanschlag bilden soll, kann entweder einstückig mit dem Rollenchassis ausgebildet sein oder als separates Anflanschteil vorgesehen werden, welches mit separaten Befestigungsmitteln am Rollenchassis zu befestigen ist.

Erfindungsgemäß ist der Endanschlag einstückig mit dem Rollenchassis ausgebildet.

Diese Weiterbildung spart Montagekosten und verringert vor allem die Anzahl der benötigten Teile.

Durch die einstückige Ausbildung des Endanschlags mit dem Rollenchassis können folglich derartige Bremsrollen, nach dem einmal ein entsprechendes Werkzeug hergestellt worden ist, preiswert in großen Stückzahlen gefertigt werden.

Zu diesem Zweck weist das Rollenchassis selbst an derjenigen Stelle, wo das Bremspedal auf den Endanschlag treffen soll, einen tiefgezogenen Bereich auf, vorzugsweise von U-förmigem Querschnitt.

In den beiden Parallelschenkeln des U wird dann die Pedalachse des Bremspedals gelagert, während der Querschenkel des U durch das im Inneren des U bewegliche Bremspedal als Endanschlag beaufschlagt wird.

In einer weiteren Ausführungsform der Erfindung wird darüber hinaus das Rollenchassis bezüglich seiner Längsmittellinie symmetrisch ausgebildet, so dass auf der einen Querseite das Bremspedal in oben beschriebener Weise gelagert wird, während auf der gegenüberliegenden Querseite ein Druckhebel schwenkbar gelagert sitzt, der Bestandteil des Koppelgetriebes zur Betätigung der Bremse ist.

Der Druckhebel wird dabei von dem Bremspedal in die Bremsstellung verlagert und kann, da er mittig zentral in Längsrichtung über das Rollenchassis läuft, den Bremskörper in den Bremseingriff verlagern.

Dies geschieht über einen entsprechenden Druckstift, der das Rollenchassis in Normalrichtung durchsetzt und oben auf dem Bremskörper abgestützt wird.

Von vereinfachter Bauweise mit langer Haltbarkeit sind derartige Bremsrollen, die mit einem Bremskörper ausgestattet sind in Form eines Hebels, der auf eine Umfangsfläche der Rolle drückt.

Dabei weist der Hebel auf lediglich einer Seite der Hebeldrehachse sowohl seine Bremsfläche als auch das entsprechende Betätigungsteil des Koppelgetriebes auf.

Derartige Ausgestaltung eignet sich insbesondere auch für Bremsrollen, die als sogenannte Lenkrollen ausgebildet sind.

Dann nämlich kann die Schwenkbewegung des hebelartig ausgebildeten Bremskörpers in die Bremsstellung auch zugleich eine Betätigungsfunktion für einen Lenkfeststeller übernehmen.

Wird nämlich der oberhalb der Rollendrehachse angeordnete Bremskörper in Richtung zur Umfangsfläche der Laufrolle gedrückt, schwenkt er mit seinem jenseits der Hebeldrehachse angeordneten Ende in Richtung zum Rollenchassis und kann mit dieser Schwenkbewegung einen Lenkfeststeller in Bewegung setzen, der zwischen der drehbaren Rollengabel und dem nicht drehbaren Rollenchassis über eine Verzahnung oder ähnliches eingreift.

Hierzu sind Ausführungsbeispiele gegeben.

Im Folgenden wird die Erfindung anhand von Ausführungsbeispielen näher erläutert.

Es zeigen:
Fig.1 ein Ausführungsbeispiel der Erfindung als Lenkrolle;
Fig.2 Detailansicht eines unterfangenen Bremshebels in Bremsstellung;
Fig.3 der Bremshebel gemäß Fig.2 in Freigabestellung;
Fig.4 Ansicht gem. Fig.2 und 3 von unten;
Fig.5 Detailansicht zur Funktion des Bremshebels mit Endanschlag;
Fig.6 Endanschlag in Längsansicht;
Fig.7 Endanschlag in Aufsicht von oben.
Fig.8 ein Ausführungsbeispiel der Erfindung im Anblick von oben;
Fig.9 das Ausführungsbeispiel gem. Fig.8 in Blickrichtung IX - IX;
Fig.10 das Ausführungsbeispiel gem. Fig.8 in Blickrichtung X - X.

Sofern im Folgenden nichts anderes gesagt ist, gilt die folgende Beschreibung stets für alle Figuren.

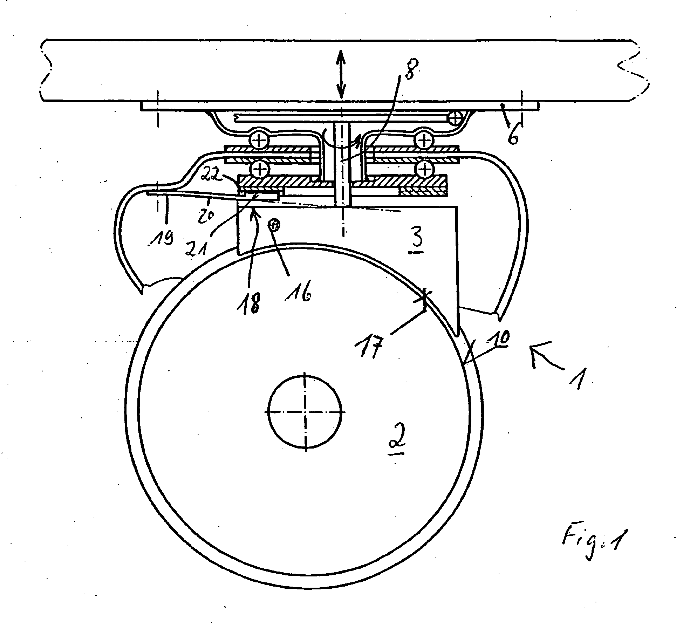

Die Figuren zeigen eine Bremsrolle 1, die gemäß Fig.1 zusätzlich auch als Lenkrolle ausgebildet ist.

An einem Rollenchassis 6, welches von unten auf den fahrbaren Gegenstand aufgeschraubt ist, ist hier über eine entsprechende Drehlagerung eine Laufrolle 2 befestigt. Die Befestigung zwischen Rollenchassis 6 und Laufrolle 2 erfolgt unter Verwendung der dargestellten Wälzkörperlagerung über die abgebrochen gezeichnete Rollengabel.

Die Rollengabel ist auf ihrer Oberseite gegenüber dem Rollenchassis 6 und auf ihrer Unterseite gegenüber einem mit dem Rollenchassis 6 drehfest verbundenen scheibenartigen Lagerkörper abgestützt.

Die Laufrolle wird an ihrem Außenumfang von einem Bremskörper 3 beaufschlagt, der - hier - in geeigneter Weise an der Rollengabel über eine Hebeldrehachse 16 schwenkbar gelagert ist.

Die Bewegung des Bremspedals 4 von der Freigabestellung 11 in die Bremsstellung 12 wird durch den Fuß erzeugt.

Dabei wird über ein Koppelgetriebe 5 die Bewegung des Bremspedals 4 auf den Bremskörper 3 so übertragen, dass dieser mit zwei seitlich der Lauffläche angeordneten Bremsbahnen von geringerem Durchmesser auf diesem Außenumfang der Laufrolle 2 in Bremsstellung gerät.

Zu diesem Zweck ist das Bremspedal 4 über einen Druckhebel 7, der am Rollenchassis 6 an seinem dem Bremspedal 4 gegenüberliegenden Ende drehbar gelagert ist und einen von der Unterseite des Druckhebels 7 beaufschlagten Druckstift 8, der gegenüber der Rollengabel in Richtung zur Laufrolle 2 federnd abgestützt ist, getrieblich mit dem Bremskörper gekoppelt.

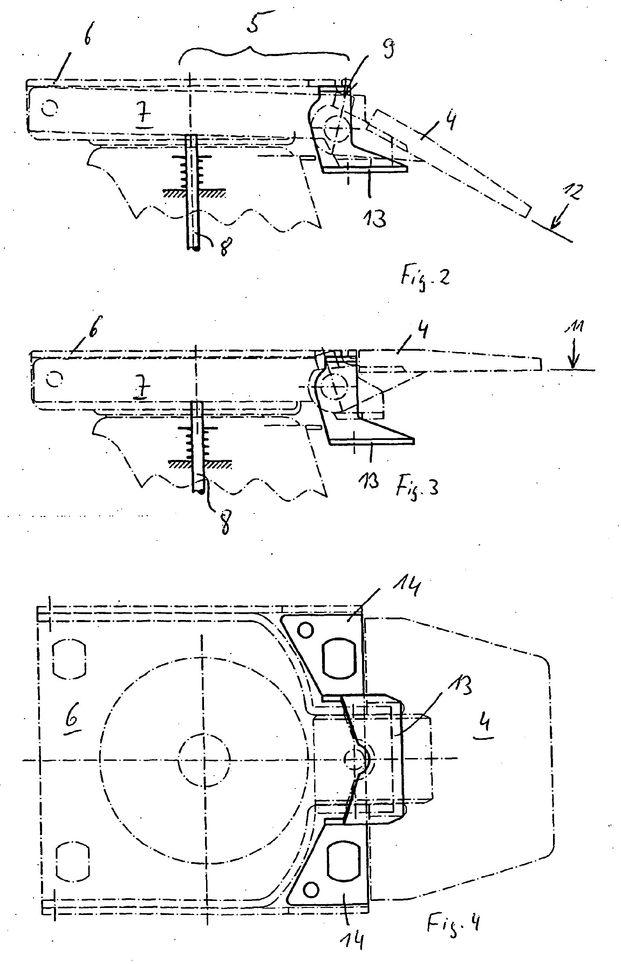

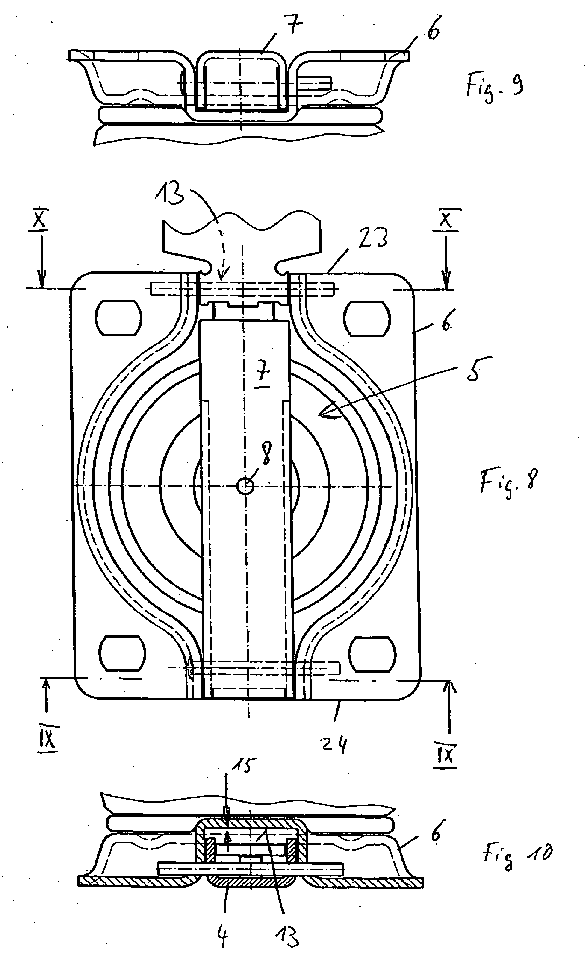

Man kann nachvollziehen, dass bei Beaufschlagung des Bremspedals 4 von der in Fig.3 gezeigten Freigabestellung 11 in die in Fig.2 gezeigte Bremsstellung 12 der Druckhebel 7 aus seiner zunächst horizontalen Position gem. Fig.3 in eine leicht geneigte Position gem. Fig.2 verlagert wird und dabei den Druckstift 8 in Richtung zur Laufrolle 2 bewegt. Dies gilt sinngemäß auch für die Darstellung gem. der Figuren 8 bis 10.

Hierdurch wird der Bremskörper 3, der schwenkbar auf der Hebeldrehachse 16 sitzt, in Richtung zur Umfangsfläche der Laufrolle 2 bewegt und der Bremsvorgang eingeleitet.

Das Koppelgetriebe 5 besteht folglich hier aus dem Druckhebel 7, dem Druckstift 8 und allen elastischen Komponenten zwischen dem Bremspedal 4 und dem Bremskörper 3.

Insoweit entspricht das Ausführungsbeispiel gem. Fig. 8-10 dem bisher gesagten.

In Abänderung hierzu ist jedoch explizit gezeigt, dass der Endanschlag 13 einstückig mit dem Rollenchassis 6 ausgebildet ist.

Dies bedeutet, dass das Rollenchassis 6 derart dreidimensional verformt ist, dass der U-förmige Endanschlag 13 für das Bremspedal 4 so zu sagen aus einem Stück mit dem Rollenchassis 6 gebildet ist.

Das Rollenchassis 6 besitzt hierzu einen tiefgezogenen Bereich, der entlang der Längsmittellinie symmetrisch ausgebildet ist und dessen Parallelschenkel zur Aufnahme der Drehachse des Bremspedals 4 dienen.

Das Bremspedal 4 selbst wird von einem entsprechend zu beaufschlagenden Bereich des Druckhebels 7 unterfangen, wobei der Druckhebel 7 an seinem gegenüberliegenden Ende in einem ebenfalls U-förmigen Bereich des Rollenchassis 6 einseitig schwenkbar gelagert ist.

Auf diese Weise entsteht ein bezüglich der Längsmittellinie symmetrisches Rollenchassis, welches einen längsverlaufenden und in Gebrauchsstellung nach oben geöffneten Kanal mit U-förmigem Profil aufweist.

An einem Ende, d.h. auf einer Querseite 23 des Rollenchassis 6 bildet der U-förmige Kanal mit seinem Querschenkel den Endanschlag 13 und auf der anderen Querseite 24 eine Lagerstelle für den Druckhebel 7, der Bestandteil des Koppelgetriebes 5 ist.

Insbesondere zeigt Fig.8 darüber hinaus, dass das Rollenchassis 6 neben dem U-förmigen Kanal auch entsprechend gedrückte kreisförmige Rollenlaufbahnen für den Fall aufweist, dass es sich um eine Lenkrolle handelt.

Das Rollenchassis 6 zusammen mit den eingepressten Wälzkörperbahnen und dem U-förmigen Kanal besteht aus einem einzigen tiefgezogenen Stück Blech.

In diesem Falle wird also der Endanschlag, der ein U-förmiges Profil aufweist, über die nach außen weisenden Befestigungsflansche 14 aus einem Stück mit dem Rollenchassis 6 gebildet.

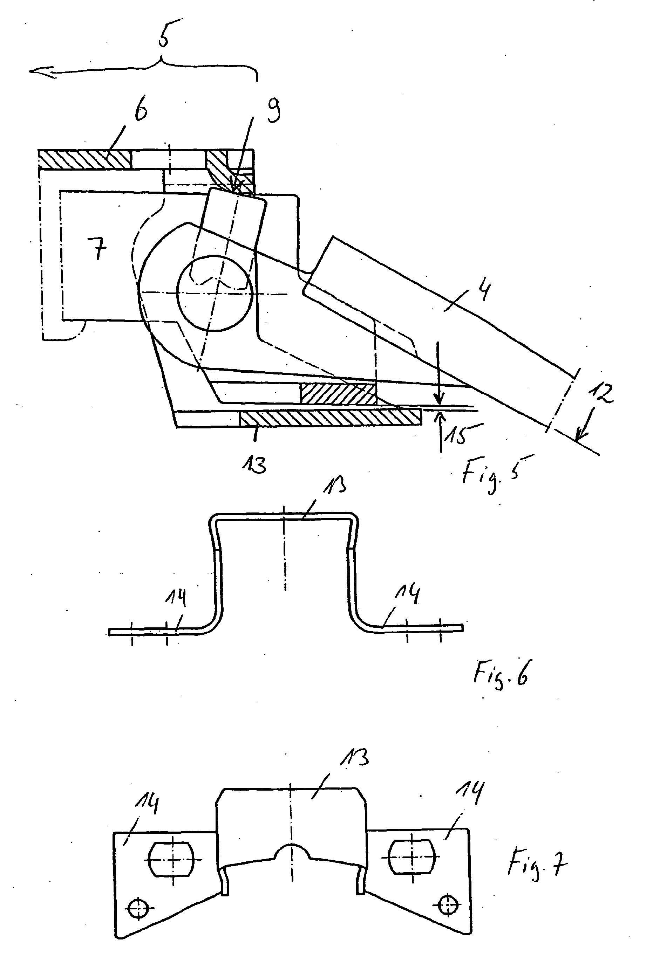

Der Endanschlag 13 kann aber auch als separates Bauteil ausgebildet sein. Dies zeigen die Fig.2-7.

Die Befestigung des Endanschlags 13 am Rollenchassis 6 erfolgt zweckmäßiger Weise über Nieten oder ähnliches.

Wie man leicht anhand der Figuren 2,3,5 und 8-10 nachvollziehen kann, wird bei Abwärtsbewegung des Bremspedals 4 über eine entsprechende Abstützung 9, die Bestandteil des Rollenchassis 6 ist, dasjenige Ende des Druckhebels 7 nach unten bewegt, an welchem das Bremspedal 4 sitzt.

Dabei überfährt das Bremspedal 4 einen mehr oder weniger ausgeprägten Totpunkt, so dass die ggf. von dem Bremskörper 3 auf den Druckhebel 7 ausgeübte Rückstellkraft nicht ausreicht, um den Druckhebel 7 in die horizontale Lage zurückzubewegen.

Etwa mittig am Druckhebel 7 sitzt ein Druckstift 8, der hier durch das Zentrum der Drehachse der Lenkrolle verläuft und in Richtung zum Druckhebel 7 elastisch abgestützt ist.

Der Druckstift 8 beaufschlagt den Bremskörper 3 von oben bis der Bremskörper 3 diejenige Stellung eingenommen hat, in welcher das Bremspedal 4 seine Bremsstellung erreicht hat.

Dabei nähert sich der Bremskörper 3 zusehends der Umfangsfläche 10 der Laufrolle 2 an, bis er dort in formschlüssigen Kontakt gerät und die Laufrolle 2 am Drehen hindert.

Über die Bremsstellung 12 hinaus ist zwischen der Unterseite des Bremspedals 4 und dem nach oben weisenden Kontaktbereich des Endanschlags 13 ein Spiel 14 vorgesehen, innerhalb dessen das Bremspedal 4 noch weiter bewegbar ist, obwohl der Bremskörper 3 sich bereits in seiner wirksamen Bremsposition befindet.

Dieses Spiel 15 dient dem Zweck, dass das Bremspedal 4 die Bremsstellung stets zuverlässig einnehmen kann.

Die elastische Koppelung der einzelnen Glieder des Koppelgetriebes 5 sorgt dann aber für eine Rückstellung des Bremspedals 4 in die Bremsstellung 12.

Durch das Spiel 15 wird erreicht, dass der zum Auflaufen des Bremspedals 4 auf den Endanschlag 13 notwendige Pedaldruck größer als der zum Blockieren der Laufrolle 2 führende Bremspedaldruck ist.

Die Ausführungsbeispiele zeigen darüber hinaus einen Bremskörper 3 in Form eines am Rollenchassis 6 gelagerten Hebels, dessen Bremsfläche 17 ebenso wie die Angriffsstelle des Druckstiftes 8 als Betätigungsteil des Koppelgetriebes 5 auf lediglich einer Seite der Hebeldrehachse 16 zu finden sind.

Ein derartiger Hebel wird, sofern er nicht auf der anderen Seite der Hebeldrehachse 16 ebenfalls kraftbelastet ist, als einseitiger Hebel bezeichnet.

Im gezeigten Ausführungsbeispiel ist jedoch der Bremskörper 2 als zweiseitiger Hebel ausgebildet.

Es handelt sich im Ausführungsbeispiel der Fig.1 um eine sogenannte Lenkrolle, bei der es gilt, über die Bremsfunktion der Laufrolle hinaus auch eine Bremsfunktion in die Lenkbewegung zu integrieren.

Zu diesem Zweck dient diejenige Seite des zweiseitigen Hebels, die bezüglich der Hebeldrehachse derjenigen Hebelseite gegenüberliegt, wo der Druckstift 8 als Betätigungsteil des Koppelgetriebes und die Bremsfläche 17 vorgesehen sind.

Dort nämlich weist der zweiseitige Hebel, der hier den Bremskörper 3 bildet, eine Angriffsstelle 18 für einen Lenkfeststeller 19 auf.

Man kann nachvollziehen, dass bei Verlagerung des Bremskörpers 3 in die Bremsstellung das linksseitige Ende des zweiseitigen Hebels nach oben verschwenkt wird.

Dann wird der Lenkfeststeller 19 in seine Feststellposition verlagert.

Zu diesem Zweck ist der Lenkfeststeller 19 als elastische Feder 20 ausgebildet, die beim Verschwenken des zweiseitigen Hebels gegen wachsende Federkraft in die Lenkfeststellposition verlagert wird.

Zu diesem Zweck weist der Lenkfeststeller 19 eine Verzahnung 21 auf, die in eine entsprechende Gegenverzahnung 22 eingreift.

Die Gegenverzahnung 22 ist starr mit dem Rollenchassis 6 verbunden.

Sie sitzt auf der Unterseite einer Scheibe, die über eine rohrförmige Verbindung die Lagerstelle der Lenkrolle durchstößt und auf geeignete Weise mit dem Rollenchassis 6 verschweißt oder ähnliches ist.

Wesentlich an der Erfindung ist die Tatsache einer zwängungsfreien Koppelung zwischen Bremspedal 4 und Bremskörper 2 zum Schutz gegen Überlast, wobei dieser Grundgedanke weitergetragen wird an einer Lenkrolle, deren Lenkfeststeller ebenfalls federelastisch ausgebildet ist und infolge des begrenzten Pedalwegs des Bremspedals 4 auch nur in begrenztem Umfang in die Lenkfeststellposition verlagerbar ist.

Selbst bei weiter ansteigenden Pedalkräften wird dank der Erfindung weder eine Überlastung des Koppelgetriebes noch eine Überlastung des Lenkfeststellers erfolgen.

### Bezugszeichenliste:

- 1: Bremsrolle
- 2: Laufrolle
- 3: Bremskörper
- 4: Bremspedal
- 5: Koppelgetriebe
- 6: Rollenchassis
- 7: Druckhebel
- 8: Druckstift
- 9: Abstützung an 6
- 10: Umfangsfläche von 2
- 11: Freigabestellung
- 12: Bremsstellung
- 13: Endanschlag
- 14: Befestigungsflansch
- 15: Spiel
- 16: Hebeldrehachse
- 17: Bremsfläche
- 18: Angriffsstelle am Lenkfeststeller
- 19: Lenkfeststeller
- 20: Feder
- 21: Verzahnung von 19
- 22: Verzahnung von 6
- 23: 1. Querseite
- 24: 2. Querseite

## Patentansprüche

1. Bremsrolle (1) mit einer Laufrolle (2) und einem Bremskörper (3), der von einem Bremspedal (4) über ein Koppelgetriebe (5) in Richtung zur Umfangsfläche (10) der Laufrolle (2) bewegt und nach Überschreiten der Totpunktstellung des Bremspedals (4) in seiner Bremsstellung (12) so lange in Anlage an die Umfangsfläche (10) gehalten wird, bis das Bremspedal (4) aus der Bremsstellung (12) rückwärts über die Totpunktstellung in die Freigabestellung (11) zurückverlagert wird, wobei für das Bremspedal (4) auf seinem Weg von der Freigabestellung (11) in die Bremsstellung (12) ein Endanschlag (13) vorgesehen ist, der das Bremspedal (4) unterfängt und auf welchen das Bremspedal (4) unter vorbestimmter Pedalkraft starr aufläuft, **dadurch gekennzeichnet, dass** der Endanschlag einstückig mit dem Rollenchassis (6) ausgebildet ist und von einem tiefgezogenen Bereich des Rollenchassis (6) gebildet wird.

2. Bremsrolle (1) nach Anspruch 1, **dadurch gekennzeichnet, dass** das Rollenchassis (6) einen längsverlaufenden und in Gebrauchsstellung nach oben geöffneten Kanal mit U-förmigem Profil aufweist, der auf einer Querseite (23) mit seinem Querschenkel den Endanschlag (13) bildet und auf der anderen Querseite (24) einer Lagerstelle für einen Druckhebel (7) aufnimmt, der Bestandteil des Koppelgetriebes (5) ist.

3. Bremsrolle (1) nach einem der Ansprüche 1 oder 2, **dadurch gekennzeichnet, dass** der Bremskörper (3) ein am Rollenchassis (6) gelagerter Hebel ist, der sowohl seine Bremsfläche (17) als auch das Betätigungsteil (8) des Koppelgetriebes auf lediglich einer Seite der Hebeldrehachse (16) aufweist.

4. Bremsrolle (1) nach Anspruch 3, **dadurch gekennzeichnet, dass** die Bremsrolle (1) als Lenkrolle ausgebildet ist, und dass der Bremskörper (3) als zweiseitiger Hebel ausgebildet ist, der auf einer Hebelseite sowohl das Betätigungsteil (8) des Koppelgetriebes (5) als auch die Bremsfläche (17) und auf der anderen Hebelseite eine Angriffsstelle (18) für einen Lenkfeststeller (19) aufweist.

5. Bremsrolle (1) nach Anspruch 4, **dadurch gekennzeichnet, dass** der Lenkfeststeller (19) als elastische Feder (20) ausgebildet ist, die gegen wachsende Federkraft in die Lenkfeststellposition verlagert wird.

6. Bremsrolle (1) nach einem der Ansprüche 1 bis 5, **dadurch gekennzeichnet, dass** der zum Auflaufen des Bremspedals (4) auf den Endanschlag (13) notwendige Pedaldruck größer als der zum Blockieren der Bremsrolle (1) notwendige Bremsdruck auf das Bremspedal (4) ist.

## Claims

1. Brake roller (1) having a track roller (2) and a brake body (3) which is moved by a brake pedal (4) via a coupling gear (5) in the direction towards the peripheral surface (10) of the track roller (2) and, after the dead centre position of the brake pedal (4) in its braking position (12) has been exceeded, is held in abutment against the peripheral surface (10) until the brake pedal (4) is shifted back from the braking position (12) rearwards via the dead centre position to the release position (11), wherein an end stop (13) is provided for the brake pedal (4) on its path from the release position (11) to the braking position (12), said end stop supports the brake pedal (4) from beneath and the brake pedal (4) runs rigidly onto the said end stop under a predetermined pedal force, **characterised in that** the end stop is formed in one piece with the roller chassis (6) and is formed by a deep-drawn region of the roller chassis (6).

2. Brake roller (1) as claimed in claim 1, **characterised in that** the roller chassis (6) comprises a longitudinally extending channel which is open at the top in the usage position, has a U-shaped profile and which on a transverse side (23) forms with its transverse limb the end stop (13) and accommodates on the other transverse side (24) of a bearing point for a compression lever (7) which forms part of the coupling gear (5) [*sic*]*.*

3. Brake roller (1) as claimed in any one of claims 1 or 2, **characterised in that** the brake body (3) is a lever which is mounted on the roller chassis (6) and which comprises both its braking surface (17) and the actuating part (8) of the coupling gear on merely one side of the axis of rotation (16) of the lever.

4. Brake roller (1) as claimed in claim 3, **characterised in that** the brake roller (1) is formed as a steering roller and **in that** the brake body (3) is formed as a two-sided lever which on one lever side comprises the actuating part (8) of the coupling gear (5) and also the braking surface (17) and on the other lever side comprises an engagement point (18) for a steering locking device (19).

5. Brake roller (1) as claimed in claim 4, **characterised in that** the steering locking device (19) is formed as a resilient spring (20) which is shifted against increasing spring force to the steering locking position.

6. Brake roller (1) as claimed in any one of claims 1 to 5, **characterised in that** the pedal pressure required for the brake pedal (4) to run onto the end stop (13) is greater than the braking pressure upon the brake pedal (4) as required for blocking the brake roller (1).

## Revendications

1. Galet de frein (1) avec un galet de roulement (2) et un corps de frein (3) qui est déplacé par une pédale de frein (4), par l'intermédiaire d'un mécanisme articulé (5), en direction de la surface périphérique (10) du galet de roulement (2) et qui, après dépassement de la position de point mort de la pédale (4), est maintenu dans sa position de freinage (12) contre ladite surface périphérique (10) jusqu'à ce que la pédale (4) soit ramenée, vers l'arrière, de la position de freinage (12) à la position relâchée (11), en passant par la position de point mort, étant précisé qu'il est prévu pour la pédale de frein (4), sur sa trajectoire entre la position relâchée (11) et la position de freinage (12), une butée de fin de course (13) qui soutient la pédale de frein (4) et sur laquelle ladite pédale (4) s'applique rigidement sous l'action d'une force de pédale prédéfinie, **caractérisé en ce que** la butée de fin de course est réalisée d'une seule pièce avec le châssis de galet (6) et est formée par une zone emboutie de celui-ci.

2. Galet de frein (1) selon la revendication 1, **caractérisé en ce que** le châssis de galet (6) présente un conduit longitudinal et ouvert vers le haut, en position d'utilisation, qui a un profil en U, qui, sur un côté transversal (23), forme avec sa branche transversale la butée de fin de course (13), et qui, sur l'autre côté transversal (24), reçoit un point d'appui pour un levier de pression (7) qui fait partie du mécanisme articulé (5).

3. Galet de frein (1) selon l'une des revendications 1 ou 2, **caractérisé en ce que** le corps de frein (3) consiste en un levier qui est monté sur le châssis de galet (6) et qui présente sur un seul côté de l'axe de pivotement de levier (16) à la fois sa surface de freinage (17) et l'élément d'actionnement (8) du mécanisme articulé.

4. Galet de frein (1) selon la revendication 3, **caractérisé en ce qu'**il est conçu comme une roulette et **en ce que** le corps de frein (3) est conçu comme un levier du premier type qui présente sur un côté de levier à la fois l'élément d'actionnement (8) du mécanisme articulé (5) et la surface de freinage (17), et sur l'autre côté de levier un point d'action (18) pour l'élément de blocage de direction (19).

5. Galet de frein (1) selon la revendication 4, **caractérisé en ce que** l'élément de blocage de direction (19) est conçu comme un ressort élastique (20) qui est amené dans la position de blocage de direction à l'encontre d'une force de ressort croissante.

6. Galet de frein (1) selon l'une des revendications 1 à 5, **caractérisé en ce que** la pression de pédale qui est nécessaire pour appliquer la pédale de frein (4) sur la butée de fin de course (13) est supérieure à la pression de freinage sur la pédale (4) qui est nécessaire pour bloquer le galet de frein (1).
